**Europäisches Patentamt**

**European Patent Office**

**Office européen des brevets**

(19)

(11) Veröffentlichungsnummer : **0 326 506 B1**

# EUROPÄISCHE PATENTSCHRIFT

(12)

(45) Veröffentlichungstag der Patentschrift :
**17.07.91 Patentblatt 91/29**

(51) Int. Cl.⁵ : **F16G 3/00**

(21) Anmeldenummer : **89630015.9**

(22) Anmeldetag : **23.01.89**

---

(54) Verfahren zur Herstellung von lösbaren Gurtverbindungen.

---

(30) Priorität : **23.01.88 DE 3801901**

(43) Veröffentlichungstag der Anmeldung :
**02.08.89 Patentblatt 89/31**

(45) Bekanntmachung des Hinweises auf die
Patenterteilung :
**17.07.91 Patentblatt 91/29**

(84) Benannte Vertragsstaaten :
**DE FR GB NL SE**

(56) Entgegenhaltungen :
**DE-C- 806 774**
**US-A- 3 588 994**

(73) Patentinhaber : **Bergwerksverband GmbH**
**Franz-Fischer-Weg 61**
**W-4300 Essen 13 (DE)**

(72) Erfinder : **Steinhoff, Friedhelm**
**Brigittastrasse 50**
**W-4300 Essen 1 (DE)**
Erfinder : **Konrad, Guido**
**Emscherstrasse 52**
**W-4690 Herne 2 (DE)**
Erfinder : **Glätzer, Dittmar**
**Lohdiekweg 18**
**W-4300 Essen 13 (DE)**
Erfinder : **Niggemann, Karl-Willi**
**Pasbachstrasse 6**
**W-4300 Essen 12 (DE)**

(74) Vertreter : **Weydert, Robert et al**
**OFFICE DENNEMEYER S.à.r.l. P.O. Box 1502**
**L-1015 Luxembourg (LU)**

EP 0 326 506 B1

---

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die Erfindung betrifft ein Verfahren zur Herstellung einer lösbaren Verbindung von zwei Gurtbandenen mittels an diesen angeordneten, ineinandergreifenden Federstahlkrampen und eines durch Ausnehmungen der ineinandergreifenden Federstahlkrampen hindurchführbaren Verbindungsstabes, wobei die geöffneten Federstahlkrampen in eine entsprechend dem Zuschnitt des Gurtbandendes geformte Hakeneinlegschiene eingelegt werden, das Gurtband mittels einer symmetrisch zur Hakeneinlegschiene angeordneten und ebenfalls entsprechend dem Zuschnitt des Gurtbandendes geformten Klemmleiste arretiert wird und schließlich die Federstahlkrampen mittels einer an der Hakeneinlegschiene geführten Einpreßvorrichtung in das Gurtbandene eingepreßt und umgebogen werden.

Bisher wird für die Herstellung einer lösbaren Gurtverbindung ein Gurtende, das rechtwinklig zugeschnitten worden ist, in die gradlinige Hakeneinlegschiene eingelegt. Entsprechend der Gurtbreite wird eine angepaßte Zahl von Federstahlkrampen in die der Hakeneinlegschiene vorgesehenen Öffnungen eingesetzt und das winklig abgeschnittene Gurtende bis an die entsprechenden Anschlaghaken unter die Klemmleiste gesteckt und durch die Klemmleiste fest positioniert. Anschließend werden nach dem Festklemmen des Gurtes in der beschriebenen Position mittels einer an der Hakeneinlegeschiene geführten und verfahrbaren Einpreßvorrichtung, die über einen Handhebel betätigbar ist und mittels Druckluft betrieben wird, von der Außenkante des Gurtes her die Federstahlkrampen der Reihe nach durch den Gurt eingepreßt und die Enden der Federstahlkrampen werden im gleichen Arbeitsgang durch die Einpreßvorrichtung umgebogen.* Zwei auf diese Weise mit Federstahlkrampen versehene Gurtenden werden derartig miteinander verbunden, daß die ineinandergreifenden Federstahlkrampen über die gesamte Gurtbreite eine Öffnung aufweisen, in welche ein aus gepanzertem Drahtseil bestehender Verbindungsstab eingeführt wird.

Bei den sogenannten Federstahlkrampen werden die Gurtenden großflächig zwischen dicht an dicht anstehenden Scharnier- oder Klemmblechen eingeklemmt. Eine solche Verbindungsart findet ausschließlich bei modernen Gurten mit hochdehnfesten Einlagen Anwendung, bei denen die Kraftübertragung weniger über die den Gurt durchdringenden Ein-

\* Die Einpressvorrichtung und die Federstahlkrampen zur Durchführung dieses bekannten Einpressverfahrens können von der Firma "MATO Maschinen- und Metallwarenfabrik Curt Matthaei GmbH & Co. KG" in D-6050 Offenbach, bezogen werden.

preßteile, als vielmehr durch Reib- bzw. Formschluß der zwischen den Scharnier- oder Klemmblechen eingequetschten Gurtenden stattfindet. Dieser Quetschvorgang verursacht ein Abfließen des an sich volumenkompressiblen elastomeren Gurtmaterials in die benachbarten unbelasteten Bereiche. Beim Einpressen von Federstahlkrampen in die Gurtenden von einer seitlichen Gurtkante zur anderen fließt dementsprechend das zu verdrängende Gurtmaterial sowohl in Richtung der Stoßkante des Gurtes als auch in den vor der Einpreßvorrichtung liegenden Bereich. Es ergibt sich also nach dem Einpreßvorgang ein Gurtende mit eingepreßten Federstahlkrampen, das in Stoßrichtung vorgewölbt und in Fließrichtung des Materials breiter ist, wobei die zuletzt verpreßte Gurtkante stärker zurückhängt, als die zuerst verpreßte Gurtkante.

Diese Verformung erweitert nicht nur die ursprüngliche Gurtbreite, sondern ergibt auch eine nahezu gleichförmig konkave Endkante.

Nach Schließen einer Gurtnaht von zwei derartig ausgebildeten Gurtbandenden mittels des erwähnten Verbindungsstabes erfolgt bei der entsprechenden Längsbelastung des Gurtes eine überdurchschnittliche Zugbelastung, insbesondere in den Randbereichen der Gurtverbindung. Diese in den Randbereichen auftretenden überduchschnittlichen Zugbelastungen sind Hinweise auf die insbesondere in den Randbereichen anfallenden häufigen Zerstörungen der Gurtverbindungen.

In der DE-C-806 774 wird eine Transportbandverbindung beschrieben, bei der zur Entlastung der Randpartien die Bandenden offensichtlich gleichförmig einwärts gekrümmt zugeschnitten werden. Für die Verbindung werden lediglich gleichlange in die Gurtenden eingebrachte Drahthaken verwendet, die in der üblichen Weise, ausgehend von der einen Bandkante nacheinander bis zur anderen Bandkante eingepreßt werden.

Demgegenüber liegt der Erfindung die Aufgabe zugrunde, ein Verfahren zur Herstellung einer lösbaren Verbindung von Gurtbandenden gemäß Oberbegriff zu schaffen, die es ermöglicht, die Federstahlkrampen derartig in die Gurtbandenen einzubringen, daß eine Gurtnaht entsteht, die eine gleichmäßige Zugbelastung über die gesamte Breite zuläßt.

Diese Aufgabe wird erfindungsgemäß dadurch gelöst, daß die Gurtbandenen nach innen bogenförmig gekrümmt zugeschnitten werden und daß die Federstahlkrampen von der Gurtmitte her nach beiden Seiten des Gurtbandes eingepreßt und umgebogen werden, wobei das durch das Zusammendrücken der Federstahlkrampen verdrängte Gurtmaterial so über die Gurtbreite verteilt wird, daß die miteinander verbundenen Gurtbandenen eine gleichmäßige Zugbelastung aufnehmen können.

Der nach innen hin geringfügig bogenförmig gekrümmte Zuschnitt des Gurtes und die entsprechende Ausbildung der Hakeneinlegschiene sowie der Klemmleiste, die jeweils abgestimmt sind auf die Art des Gurtes, ergeben bei dem erfindungsgemäßen Einbringen und Umbiegen der Federstahlkrampen in die Gurtenden eine derartige Verdrängung des Gurtmaterials wiederum zu den Enden hin, daß nach dem Einbringen der Federstahlkrampen die Gurtenden einen, nahezu gradlinige und gleichmäßige Zugbelastungen zulassenden Zuschnitt aufweisen.

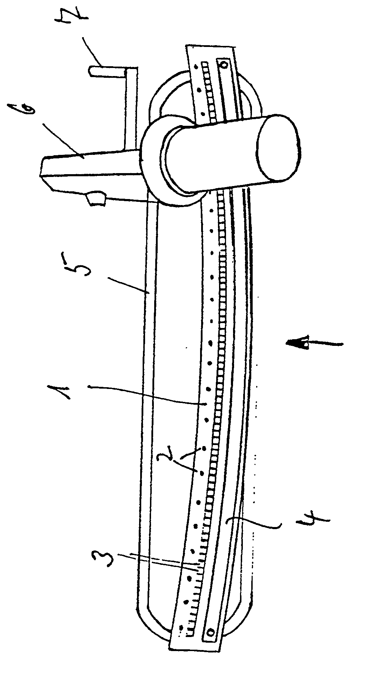

Das erfindungsgemäße Verfahren wird im Nachfolgenden anhand eines Ausführungsbeispieles einer Einrichtung zur Durchführung des Verfahrens, die in der Zeichnung als Draufsicht schematisiert wiedergegeben ist, näher beschrieben.

Die Einrichtung zur Herstellung von lösbaren Gurtverbindungen besteht, wie die Draufsicht in schematisierter Form wiedergibt, im wesentlichen aus einem Standrahmen 5, auf dem eine bogenförmig gekrümmt geformte Hakeneinlegschiene 1 und eine entsprechend geformte Klemmleiste 4 angeordnet sind. Die Klemmleiste 4 ist gegenüber der Hakeneinlegschiene 1 mittels eines nicht dargestellten Hebelelementes in der Höhe verstellbar ausgebildet, so daß Gurte mit unterschiedlichen Dicken jeweils auf der Hakeneinlegschiene 1 fest positioniert werden können. Die Hakeneinlegschiene 1 weist über die Breite nebeneinanderliegende rechtwinklige oder quadratische Öffnungen 3 auf, in welche die geöffneten Federstahlkrampen bekannter Bauart eingelegt werden. Weiterhin weist die Hakeneinlegschiene 1 über die gesamte Breite Haken 2 auf, die als Gurtendanschläge ausgebildet sind. Die Einpreßvorrichung 6, die über einen Handhebel 7 entlang der Hakeneinlegschiene 1 verfahrbar ist, ist unterhalb der Hakeneinlegschiene 1 an dieser geführt. Für die Durchführung des Verfahrens zur Herstellung einer lösbaren Verbindung von Gurtbandenden ist es erforderlich, daß die in die Einrichtung einlegbaren Gurtbandenden entsprechend der konvoxon bogenförmig gekrümmten Ausbildung der Hakeneinlegschiene 1 und der Klemmleiste 4 zugeschnitten werden. Für diesen Zuschnitt kann zweckmäßigerweise ein entsprechend herzustellendes Kurvenlineal verwendet werden. Um ein Gurtbandende mit den entsprechenden Federstahlkrampen zu versehen und diese entsprechend einzubringen, werden zunächst über die Breite der Hakeneinlegschiene 1 in die entsprechenden Öffnungen 3 die geöffneten Federstahlkrampen eingelegt. Anschließend wird das zugeschnittene Gurtbandende in Richtung des Pfeiles zwischen Hakeneinlegschiene 1 und Klemmleiste 4 bis zu den, einen Anschlag bildenden Haken 2 eingeführt und anschließend wird das Gurtende mittels der Klemmleiste 4 in der Position arretiert. Mittels der Einpreßvorrichtung 6 werden anschließend die Federstahlkrampen von der Mitte her abwechselnd nach beiden Seiten des Gurtbandes eingepreßt und umgebogen. Dabei werden die durch das Zusammendrücken der Federstahlkrampen verdrängten Gewebemassen so über die Gurtbreite verteilt, daß sie in Verbindung mit dem korrespondierenden Gurtbandende eine gleichmäßige Zugbelastung aufnehmen können.

1  Hakeneinlegschiene
2  Haken (Gurtendanschlag)
3  Öffnungen
4  Klemmleiste
5  Standrahmen
6  Einpreßvorrichung
7  Handhebel

## Patentansprüche

1. Verfahren zur Herstellung einer lösbaren Verbindung von zwei Gurtbandenen mittels an diesen angeordneten, ineinandergreifenden Federstahlkrampen und eines durch Ausnehmungen der ineinandergreifenden Federstahlkrampen hindurchführbaren Verbindungsstabes, wobei die geöffneten Federstahlkrampen in eine entsprechend dem Zuschnitt des Gurtbandendes geformte Hakeneinlegschiene (1) eingelegt werden, das Gurtband mittels einer symmetrisch zur Hakeneinlegschiene (1) angeordneten und ebenfalls entsprechend dem Zuschnitt des Gurtbandendes geformten Klemmleiste (4) arretiert wird und schließlich die Federstahlkrampen mittels einer an der Hakeneinlegschiene (1) geführten Einpreßvorrichtung (6) in das Gurtbandene eingepreßt und umgebogen werden, dadurch gekennzeichnet, daß die Gurtbandenen nach innen bogenförmig gekrümmt zugeschnitten werden und daß die Federstahlkrampen von der Gurtmitte her nach beiden Seiten des Gurtbandes eingepreßt und umgebogen werden, wobei das durch das Zusammendrücken der Federstahlkrampen verdrängte Gurtmaterial so über die Gurtbreite verteilt wird, daß die miteinander verbundenen Gurtbandenen eine gleichmäßige Zugbelastung aufnehmen können.

## Claims

1. Method for making a releasable connection of two webbing ends by means of thereat arranged interengaging spring-steel clamps and a connecting rod which is guided through recesses of the interengaging spring-steel clamps, in which respect the opened spring-steel clamps are inserted into a hook-insertion rail (1) which is shaped relative to the cut of the webbing end, the webbing is arrested by means of a clamping ledge (4) which is arranged symmetrically relative to the hook-insertion rail (1) and also shaped relative to the cut of the webbing end, and finally the spring-steel clamps are pressed into the webbing end by means of an insertion means (6), which is guided on the hook-insertion rail (1) and bend over, **characterised in that** the webbing ends are inwardly arc-shaped cut, and in that the spring-steel clamps are pressed in and bent over from the webbing centre towards both sides of the webbing, whereby the webbing material which has been displaced by the compression of the spring-steel clamps, is spaced over the width of the webbing in such a manner that the inter-connected webbing ends can accommodate an even tensile load.

**Revendications**

1. Procédé de réalisation d'une liaison démontable entre deux courroies en bande au moyen de crampons en acier à ressort disposés sur celles-ci et faisant prise les uns dans les autres et d'une baguette de liaison pouvant être introduite au travers d'évidements dans les crampons d'acier à ressort faisant prise les uns dans les autres, étant entendu que les crampons d'acier à ressort ouverts sont placés dans un rail (1) de mise en place des crochets, de forme correspondant à la découpe de la courroie de bande, que la courroie est bloquée au moyen d'une règle de serrage (4) disposée symétriquement par rapport au rail (1) de mise en place des crochets et de forme correspondant, de la même façon, à la découpe de la courroie, et qu'enfin les crampons d'acier à ressort sont enfoncés à pression dans la courroie de bande au moyen d'un dispositif d'enfoncement par pression (6) guidé sur le rail de mise en place des crochets, puis repliés, caractérisé en ce que les extrémités de la courroie sont coupées en formant un arc courbé vers l'intérieur et que les crampons en acier à ressort sont enfoncés par pression en partant du milieu de la courroie vers les deux côtés de la courroie, puis sont repliés, tandis que la matière de la courroie, refoulée par le pressage des crampons en acier à ressort est répartie sur la largeur de la courroie de telle façon que les extrémités de la courroie raccordées entre elles peuvent reprendre un effort de traction uniforme.